**Europäisches Patentamt**

**European Patent Office**

**Office européen des brevets**

(11) Publication number: **0 218 037**
**B1**

# EUROPEAN PATENT SPECIFICATION

(45) Date of publication of the patent specification:
**04.10.89**

(51) Int. Cl.⁴: **F02F 7/00, F16C 9/02**

(21) Application number: **86110866.0**

(22) Date of filing: **06.08.86**

(54) Support structure for an internal combustion engine crankshaft.

(30) Priority: **24.09.85  IT 6781585**

(43) Date of publication of application:
**15.04.87 Bulletin 87/16**

(45) Publication of the grant of the patent:
**04.10.89 Bulletin 89/40**

(84) Designated Contracting States:
**DE FR GB**

(56) References cited:
**DE-A-3 405 818**
**FR-A-768 639**
**FR-A-2 166 726**
**GB-A-269 713**
**US-A-2 098 451**
**US-A-3 965 880**
**US-A-4 265 495**

(73) Proprietor: **IVECO FIAT S.p.A., Via Puglia 35,**
**I-10156 Torino(IT)**

(72) Inventor: **Liviantoni, Orfeo, Via Vandalino, 1,**
**I-10100 Torino(IT)**
Inventor: **Tardi', Riccardo, Via Breglio, 87,**
**I-10100 Torino(IT)**

(74) Representative: **Boggio, Luigi et al, c/o Ingg. Carlo e**
**Mario Torta Via Viotti, 9, I-10121 Torino(IT)**

## Description

This invention relates to a support structure for an internal combustion engine crankshaft, by which the overall axial length of the engine can be reduced and the engine assembly simplified. The crankshaft of an engine of this type is provided with a plurality of journals, each of which is supported by a corresponding main bearing formed on the engine crankcase, and with a plurality of pairs of crank webs between which crank pins are disposed. The rear end of the crankshaft comprises a flange to which the engine flywheel is connected. Said flange is disposed on one side of the main bearing and therefore forms an axial shoulder which constitutes a corresponding axial bearing for the crankshaft, on that side distant from the flange there being provided on the crankshaft another shoulder which also forms an axial bearing for the shaft. Consequently said end main bearing not only supports the radial loads transmitted between the crankshaft and crankcase, but is also able to support the axial loads acting on the shaft.

Support structure of the indicated type also comprise an end plate which is fixed to the crankcase and comprises a seat for housing an annular seal gasket which is arranged to cooperate with the cylindrical outer surface of the said crankshaft flange, in order to provide a seal between the inside of the crankcase and the outside environment. The flywheel is normally fixed to the end of the crankshaft by screws, each of which is screwes into a corresponding threaded bore provided substantially in said flange. Structures having some of the mentioned features are described in FR-A 2 166 726 and US-A 3 965 880.

The support structure of the indicated type has certain drawbacks. Firstly, the presence of the said flange on one side of the crankshaft end journal increases the overall axial length of the engine and does not allow compact structural arrangements of very small overall dimensions to be formed. Such support structures are also constructionally rather complicated in the end zone of the crankshaft where the main bearing for supporting both radial and axial loads is situated. This bearing must therefore have a cylindrical support surface for supporting radial loads, and a pair of flat surfaces adjacent to the preceding for supporting the axial loads. The surfaces of the said crankshaft shoulders and the surface of the crankshaft end journal all cooperate with said surfaces. The result is that in order to obtain correct cooperation between these surfaces, adjustment operations are necessary during assembly, and special care and caution are required during the various assembly stages.

The object of the present invention is to provide a support structure for an internal combustion engine crankshaft which is free from the aforsaid drawbacks and is therefore of small overall dimensions and can be mounted by simple and rapid operations.

This object is attained by a support structure for an internal combustion engine, comprising a crankcase in which there rotates a crankshaft provided with a plurality of journals supported by corresponding main bearings formed on the crankcase, and with a plurality of pairs of crank webs between which crank pins are disposed, a flywheel being connected to the rear end of said crankshaft, characterised in that the end journal located at the same end as the flywheel has a single cylindrical support surface free from axial shoulders, and of which a first portion is arranged to rest on a surface of the corresponding main bearing, and a second portion, adjacent to the preceding, is disposed on the side facing said flywheel and is arranged to form a seat for an annular seal gasket, said two surface portions having the same diameter, in said end journal there being provided threaded axial bores of length substantially equal to the length of said cylindrical surface, and in which corresponding screws are screwed for fixing said flywheel to said end journal, at least one other of said main bearings being provided with a pair of shoulder rings, each of which is disposed between the front surface of said bearing and the corresponding surface of that crank web adjacent to said main bearing.

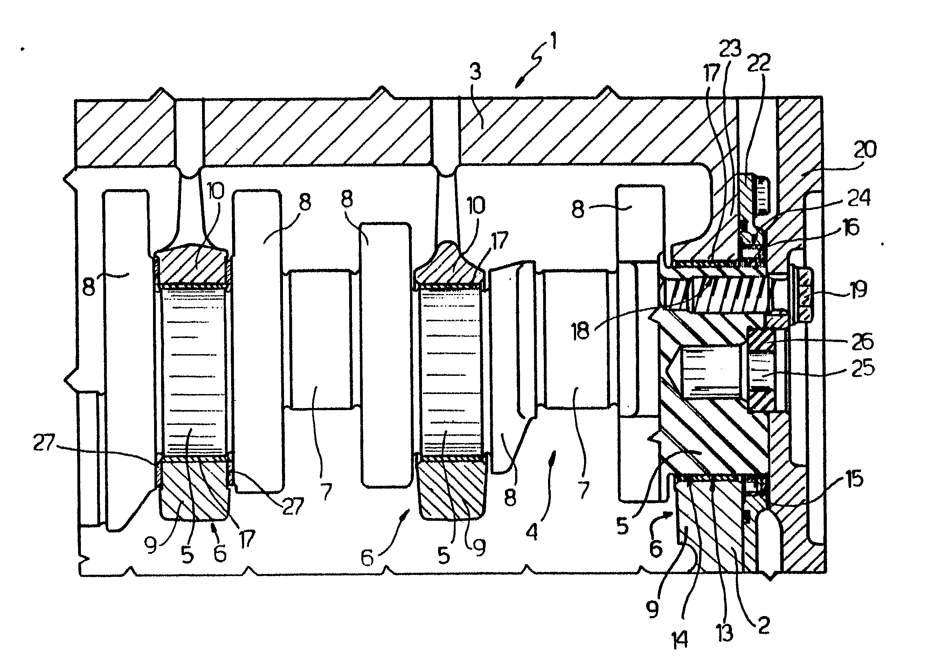

The present invention will be more apparent from the detailed description thereof given hereinafter by way of example with reference to the accompanying drawing, which shows an axial section through a part of the support structure according to the invention.

The support structure according to the invention substantially comprises a crankcase indicated overall by 1, consisting of a lower part 2 and an upper part 3 fixed to this latter and separated therefrom along a joining plane (not shown) substantially orthogonal to the plane of the drawing.

In this crankcase there rotates a crankshaft 4, which is provided with a plurality of journals 5, each of which is supported by a corresponding main bearing 6 formed on the crankcase 1. The crankshaft also comprises a plurality of crank pins 7 each of which is disposed between a pair of corresponding cranks 8.

Each main bearing 6 comprises a first part 9, either formed on the lower part 2 of the crankcase 1 or independent therefrom, and a second part 10 formed on the upper part of the crankcase.

According to the invention, the journal 5 at the rear end of the crankshaft, namely that to the right in the figure, has a single cylindrical support surface 13, which is free from axial shoulders as can be clearly seen in the figure, and of which a first portion 14 is arranged to rest on the support surface of the corresponding main bearing 6, and a second portion 15 adjacent to the preceding is arranged to form a seat for an annular seal gasket 16. Said two surface portions have the same diameter, and a suitable layer of antifriction material 17 is conveniently disposed between the first portion 14 and the bearing 6. A layer of the same material is disposed between each of the other journals 5 and the corresponding main bearings 6.

In the end journal 5 there are provided threaded axial bores 18, each of which has a length substantially equal to the length of the cylindrical surface 13, corresponding screws 19 being screwed into said bores to fix the flywheel 20 to the crankshaft 4.

A substantially flat plate 22 is fixed to the end wall 23 of the crankcase 1, and is provided with a through hole 24 forming a seat for the annular gasket 16. As can be clearly seen in the figure, the maximum thickness of this plate is substantially equal to the axial length of said annular gasket.

The axial length of the cylindrical surface 13 is substantially equal to the sum of the axial length of the end main bearing 6 which supports said surface and the axial length of the annular seal gasket 16.

At least one other of the main bearings 6 is provided with a pair of shoulder rings 27, each of which is disposed between the front surface of the corresponding main bearing 6 and the corresponding surface of that crank web 8 adjacent to said main bearing, in order, by means of the combination of said shoulder rings and those surfaces of the crank webs which rest against them, to form bearings able to support the axial forces acting on the crankshaft and which have to be transmitted from this latter to the crankcase 1.

As can be clearly seen in the figure, the diameter of the end journal 5 of the crankshaft and the diameter of the relative main bearing 6 are conveniently greater than the diameters of the other crankshaft journals and of the other crankcase main bearings respectively. In addition, in the end journal 6 there are provided an axial bore 25 and a suitable seat for a rolling bearing 26 for supporting the end of the gear shaft.

It is apparent that the described support structure enables an engine of fairly short axial length to be constructed, as the end flange normally provided on the crankshafts of the described support structures of the prior art is totally absent. Because of this, the axial length of the end journal 5 of the crankshaft (ie the axial length of the cylindrical surface 13) is very small and is equal to the sum of the lengths of the corresponding main bearing 6 and annular gasket 16. Moreover, the connection between the flywheel 20 and crankshaft 4 has very high mechanical strength and is completely reliable because of the length of the axial bores 18 provided in the end journal 5, and which can be substantially equal to the total length of the journal itself.

Finally, the operations involved in assembling the crankshaft in the crankcase 1 are considerably simplified, because axial support surfaces are not present at the end journal 5 of the crankshaft as is the case with constructions of the prior art, and in this zone there is therefore a considerable constructional simplification which facilitates assembly and dispenses with the need for adjusting operations.

## Claims

1. A support structure for an internal combustion engine, comprising a crankcase (1) in which there rotates a crankshaft (4) provided with a plurality of journals (5) supported by corresponding main bearings (6) formed on the crankcase, and with a plurality of pairs of crank webs (8) between which crank pins (7) are disposed, a flywheel (20) being connected to the rear end of said crankshaft and at least one other of said main bearings (6) being provided with a pair of shoulder rings (27), each of which is disposed between the front surface of said bearing and the corresponding surface of that crank web (8) adjacent to said main bearing, characterised in that the rear end of the crankshaft beyonol the rear crank web has a single cylindrical support surface (13) free from axial shoulders, the first portion (14) of which is the end journal located at the same end as the flywheel and is arranged to rest on a surface of the corresponding main bearing, and a second portion (15) of which, adjacent to the preceding, is disposed on the side facing said flywheel and is arranged to form a seat for an annular seal gasket (16), said two surface portions having the same diameter and the axial length of said cylindrical support surface (13) being substantially equal to the sum of the axial length of said main bearing which supports said first portion (14) and the axial length of said annular seal gasket (16), in said end journal there being provided threaded axial bores (18) of length substantially equal to the length of said cylindrical support surface (13), and in which corresponding screws (19) are screwed for fixing said flywheel to said end journal.

2. A structure as claimed in claim 1, characterised in that said annular seal gasket (16) is supported by a plate (22) fixed to a wall of said crankcase and in which a through hole (24) is provided to form said seat for said gasket, the maximum thickness of said plate being substantially equal to the axial length of said annular gasket.

3. A structure as claimed in claim 1 or 2, characterised in that the diameter of said end journal and the diameter of the relative main bearing are greater than the diameters of the other crankshaft journals and of the other crankcase main bearings respectively.

## Revendications

1. Structure de support pour un moteur à combustion interne, comprenant un carter (1) dans lequel tourne un vilebrequin (4) muni de plusieurs tourillons (5) supportés par des paliers principaux correspondants (6) formés sur le carter, et de plusieurs paires de bras (8) de vilebrequin entre lesquels sont disposés des mannetons (7), un volant d'inertie (20) étant relié à l'extrémité arrière dudit vilebrequin et au moins un autre desdits raliers prinsciapux (6) étant muni d'une paire de bagues épaulées (27) disposées chacune entre la surface avant dudit palier et la surface correspondante du bras (8) de vilebrequin adjacent audit palier principal, caractérisée en ce que l'extrémité arrière du vilebrequin, au-delà du bras arrière de manivelle, présente une surface cylindrique unique (13) de support sans épaulements axiaux, dont la première partie (14) est le tourillon extrême situé à la même extrémité que le volant d'inertie et est agencé pour reposer sur une surface du palier principal correspondant, et dont une seconde partie 15, adjacente à la précédente, est disposée sur le côté faisant face audit volant d'inertie et est agencée pour former un siège pour un joint annulaire (16) d'étanchéité, lesdites deux parties de surface ayant le même diamètre et la longueur axiale de ladite surface cylindrique (13) de support étant sensiblement égale à la somme de la longueur axiale dudit palier principal qui supporte ladite première partie (14) et de la longueur axiale dudit joint annulaire (16) d'étanchéité, ledit tourillon extrême présentant des trous axiaux taraudés (18) d'une longueur sensiblement égale à la longueur de ladite surface cylindrique (13) de support et dans lesquels des vis correspondantes (19) sont vissées pour fixer ledit volant d'inertie audit tourillon extrême.

2. Structure selon la revendication 1, caractérisé en ce que ledit joint annulaire (16) d'étanchéité est supporté par une plaque (22) fixée à une paroi dudit carter et traversée d'un trou (24) pour former ledit siège pour ledit joint, l'épaisseur maximale de ladite plaque étant sensiblement égale à la longueur axiale dudit joint annulaire.

3. Structure selon la revendication 1 ou 2, caractérisée en ce que le diamètre dudit tourillon extrême et le diamètre du palier principal correspondant sont plus grands que le diamètre des autres tourillons du vilebrequin et des autres paliers principaux du vilebrequin, respectivement.

**Patentansprüche**

1. Stützstruktur für einen Verbrennungsmotor, bestehend aus einem Kurbelgehäuse (1), in dem sich eine Kurbelwelle (4) dreht, versehen mit einer Anzahl an Wellenzapfen (5), die von entsprechenden Hauptlagern (6) getragen werden, die sich auf dem Kurbelgehäuse befinden, und einer Anzahl an Kurbelarmpaaren (8), zwischen denen sich Kurbelzapfen (7) befinden, ein Schwungrad (20) ist mit dem hinteren Endstück besagter Kurbelwelle verbunden und mindestens ein weiteres der besagten Hauptlager (6) ist mit einem Paar Schulterringen (27) versehen, jedes dieser Paare befindet sich zwischen der Vorderseite des besagten Hauptlagers und der entsprechenden Oberfläche des Kurbelarms (8), der an besagtes Hauptlager angrenzt, dadurch gekennzeichnet, daß das hintere Ende besagter Kurbelwelle, jenseits des hinteren Endes des Kurbelarmes, mit einer einzigen zylinderförmigen Stützfläche (13) versehen ist, frei von axialen Schulterstücken, das erste Teilstück (14) des Systems besteht aus dem Endwellenzapfen, der sich am selben Ende befindet wie das Schwungrad und so montiert ist, daß er auf einer Oberfläche des entsprechenden Hauptlagers verbleibt, das zweite Teilstück (15) des Systems ist, angrenzend an das vorhergehende, auf der Oberfläche gegenüber des besagten Schwungrads montiert und so befestigt, daß es den Sitz für eine ringförmige Dichtung (16) formt, beide besagten Flächenteilstücke haben denselben Durchmesser und dieselbe axiale Länge wie die besagte zylinderförmige Stützfläche (13) und stimmen grundsätzlich mit der Summe der axialen Länge des besagten Hauptlagers überein, welches besagtes erstes Teil (14) stützt und mit der axialen Länge der besagten ringförmigen Dichtung (16), besagter Endwellenzapfen ist mit einer gestrehlten axialen Bohrung (18) versehen, deren Länge grundsätzlich mit der der zylinderförmigen Stützfläche (13) übereinstimmt, und in die entsprechende Schrauben (19) geschraubt sind, um besagtes Schwungrad an besagtem Endwellenzapfen zu befestigen.

2. Struktur nach Anspruch 1, dadurch gekennzeichnet, daß besagten ringförmige Dichtung (16) von einer Platte (22) gestützt wird, die an einer Wand des besagten Kurbelgehäuses befestigt ist und die mit einer Bohrung (24) versehen ist, die besagten Sitz für besagte Dichtung formt, die maximale Stärke besagter Platte stimmt grundsätzlich mit der axialen Länge besagter ringförmiger Dichtung überein.

3. Struktur nach Anspruch 1 oder 2, dadurch gekennzeichnet, daß der Durchmesser des besagten Endwellenzapfens und der Durchmesser des entsprechenden Hauptlagers größer ist, als die Durchmesser der anderen Kurbelwellenzapfen und der anderen entsprechenden Hauptlager des Kurbelgehäuses.